# EUROPEAN PATENT APPLICATION

(11) **EP 4 152 572 A1**
(43) Date of publication of application: **22.03.2023**
(21) Application number: 21872541.4
(22) Date of filing: 24.09.2021
(51) Int. Cl.: H02K 5/04, H02K 11/30

(54) **VEHICLE DRIVE DEVICE**

(30) Priority: 25.09.2020 JP 2020161129
(71) Applicant: AISIN CORPORATION, Aichi 448-8650 (JP)
(72) Inventor: INOUE, Ryohei, Kariya-shi, Aichi 448-8650 (JP)
(74) Representative: Kramer Barske Schmidtchen Patentanwälte PartG mbB
(86) International application number: PCT/JP2021/034993
(87) International publication number: WO 2022/065412

(57) **Abstract**

A rotation sensor (61) is connected to a control unit (INV) via a first signal line (S 1), and detects rotation of a rotor (RT) of a rotary electric machine (MG). A temperature sensor (62) is connected to the control unit (INV) via a second signal line (S2), and detects a temperature of a stator (ST) of the rotary electric machine (MG). A case (9) includes a first partition portion (91) that partitions a first housing chamber (A1) that houses the rotary electric machine (MG), an input member (1), a transmission gear mechanism (2), the rotation sensor (61), and the temperature sensor (62) from a second housing chamber (A2) that houses the control unit (INV). The first partition portion (91) includes a first communication portion (91b) that communicates the first housing chamber (A1) and the second housing chamber (A2). The first signal line (S 1) and the second signal line (S2) are disposed through the first communication portion (91b).

## Description

### TECHNICAL FIELD

The present invention relates to a vehicle drive device including a rotary electric machine that functions as a driving force source for wheels, an input member drivingly connected to a rotor of the rotary electric machine, an output member drivingly connected to the wheels, a transmission gear mechanism that drivingly connects the input member and the output member, a control unit that controls the rotary electric machine, a rotation sensor that detects rotation of the rotor of the rotary electric machine, a temperature sensor that detects the temperature of a stator of the rotary electric machine, and a case that houses the rotary electric machine, the control unit, and the like.

### BACKGROUND ART

An example of such a vehicle drive device is disclosed in Patent Document 1 below. In the following descriptions of "Background Art" and "Problem to be Solved by the Invention", reference numerals in Patent Document 1 are quoted in parentheses.

In a vehicle drive device of Patent Document 1, a rotation sensor (30) that detects rotation of a rotor (21) of a rotary electric machine (20) and a temperature sensor that detects the temperature of a stator (22) of the rotary electric machine (20) are electrically connected to a control unit (44). The control unit (44) controls the rotary electric machine (20) based on a detection signal from the rotation sensor (30) and a detection signal from the temperature sensor.

### Related Art Documents

### Patent Documents

Patent Document 1: WO 2019/208096

### SUMMARY OF THE INVENTION

### Problem to be Solved by the Invention

In the vehicle drive device of Patent Document 1, a second case (41) that houses the control unit (44) is fixed to a first case (10) that houses the rotary electric machine (20), the rotation sensor (30), the temperature sensor, and the like. A first connector (51) having a terminal (70) electrically connected to the rotation sensor (30) and a terminal electrically connected to the temperature sensor is provided on the outer surface of the first case (10). A second connector (52) having a terminal electrically connected to the control unit (44) is provided on the outer surface of the second case (41). By connecting the first connector (51) and the second connector (52) with a cable (60), the rotation sensor (30) and the temperature sensor are electrically connected to the control unit (44).

In the vehicle drive device described above, the first connector (51), the second connector (52), and the cable (60) are provided to electrically connect the rotation sensor (30) and the temperature sensor housed in the first case (10) to the control unit (44) housed in the second case (41). Therefore, the number of components for electrically connecting the rotation sensor (30) and the temperature sensor to the control unit (44) has increased. Since the first connector (51), the second connector (52), and the cable (60) are exposed to the outside of the case in the vehicle drive device described above, sealing structures are required in the individual parts so that water or the like hardly enters them. Thus, in the vehicle drive device described above, the structure for connection of the rotation sensor (30) and the temperature sensor to the control unit (44) is complicated.

In view of the above, it is desirable to realize a vehicle drive device with a simple structure for connection of the rotation sensor and the temperature sensor to the control unit.

### Means for Solving the Problem

As the characteristic configuration of the vehicle drive device in view of the above, the vehicle drive device includes:
a rotary electric machine including a stator and a rotor and functioning as a driving force source for a wheel;
an input member drivingly connected to the rotor;
an output member drivingly connected to the wheel;
a transmission gear mechanism that drivingly connects the input member and the output member;
a control unit configured to control the rotary electric machine;
a rotation sensor connected to the control unit via a first signal line and configured to detect rotation of the rotor;
a temperature sensor connected to the control unit via a second signal line and configured to detect a temperature of the stator; and
a case including a first housing chamber that houses the rotary electric machine, the input member, the transmission gear mechanism, the rotation sensor, and the temperature sensor, and a second housing chamber that houses the control unit, in which
the case includes a first partition portion that partitions the first housing chamber and the second housing chamber from each other,
the first partition portion includes a first communication portion that communicates the first housing chamber and the second housing chamber, and
the first signal line and the second signal line are disposed through the first communication portion.

According to this characteristic configuration, the first partition portion that partitions the first housing chamber that houses the rotation sensor and the temperature sensor from the second housing chamber that houses the control unit includes the first communication portion that communicates the first housing chamber and the second housing chamber. The first signal line connecting the rotation sensor and the control unit and the second signal line connecting the temperature sensor and the control unit are disposed through the first communication portion. In this way, the first signal line and the second signal line are disposed across the first housing chamber and the second housing chamber through the first communication portion of the first partition portion disposed inside the case. Therefore, the first signal line and the second signal line can appropriately be disposed without providing the case with, for example, a connector exposed to the outside and an external cable connected to the connector. Thus, it is possible to reduce the number of components for electrically connecting the rotation sensor and the temperature sensor to the control unit.

According to the above characteristic configuration, the first signal line and the second signal line can be disposed inside the case without passing outside the case. Therefore, it is possible to reduce the number of locations where a sealing structure for preventing entry of water or the like into the case is provided.

As described above, according to the above characteristic configuration, it is possible to simplify the structure for connection of the rotation sensor and the temperature sensor to the control unit.

### BRIEF DESCRIPTION OF THE DRAWINGS

[FIG. 1] FIG. 1 is a sectional view taken along an axial direction of a vehicle drive device according to an embodiment.
[FIG. 2] FIG. 2 is a skeleton diagram of the vehicle drive device according to the embodiment.
[FIG. 3] FIG. 3 is a schematic diagram showing a structure for connection of elements of the vehicle drive device according to the embodiment.

### MODES FOR CARRYING OUT THE INVENTION

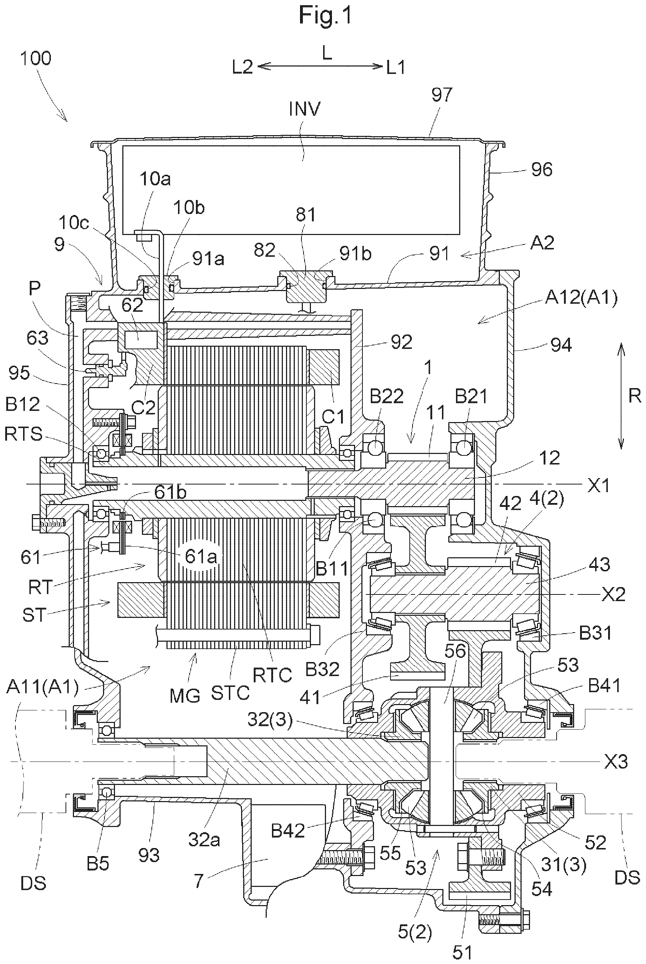

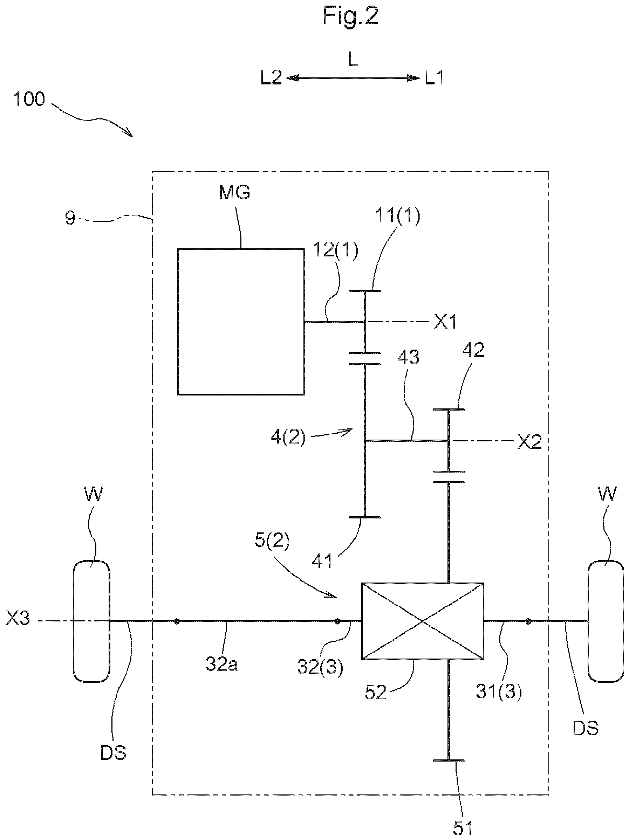

Hereinafter, a vehicle drive device 100 according to an embodiment will be described with reference to the drawings. As shown in FIGS. 1 and 2, the vehicle drive device 100 includes a rotary electric machine MG, a control unit INV, an input member 1, a transmission gear mechanism 2, output members 3, and a case 9.

In the following description, the direction along a first axis X1 that is a rotation axis of the rotary electric machine MG will be referred to as "axial direction L". One side in the axial direction L will be referred to as "first axial side L1" and the other side in the axial direction L will be referred to as "second axial side L2". The direction orthogonal to a rotation axis of a rotary member such as the rotary electric machine MG will be referred to as "radial direction R" with respect to each rotation axis. When it is not necessary to distinguish the rotation axis to be used as a reference, or when the rotation axis to be used as a reference is clear, the direction may be simply referred to as "radial direction R".

The case 9 includes a first partition portion 91 that partitions a first housing chamber A1 and a second housing chamber A2 from each other. In the present embodiment, the first partition portion 91 is formed so as to extend along the axial direction L. Therefore, in the present embodiment, the first housing chamber A1 and the second housing chamber A2 are juxtaposed in the radial direction R. The first housing chamber A1 is a space formed inside the case 9, and houses the rotary electric machine MG, the input member 1, and the transmission gear mechanism 2. The second housing chamber A2 is a space formed inside the case 9, and houses the control unit INV.

In the present embodiment, the case 9 includes a second partition portion 92 that partitions the first housing chamber A1 into a rotary electric machine chamber A11 and a gear mechanism chamber A12. The rotary electric machine chamber A11 is a space that houses the rotary electric machine MG. The gear mechanism chamber A12 is a space that houses the transmission gear mechanism 2. In the present embodiment, the gear mechanism chamber A12 is disposed on the first axial side L1 with respect to the rotary electric machine chamber A11. That is, in the present embodiment, the transmission gear mechanism 2 is disposed on the first axial side L1 with respect to the rotary electric machine MG.

In the present embodiment, the first housing chamber A1 is surrounded by a peripheral wall portion 93, a first side wall portion 94, and a second side wall portion 95. That is, in the present embodiment, the space surrounded by the peripheral wall portion 93, the first side wall portion 94, and the second side wall portion 95 inside the case 9 is formed as the first housing chamber A1.

The peripheral wall portion 93 has a tubular shape having an axis along the axial direction L. The first side wall portion 94 is formed so as to close the opening of the peripheral wall portion 93 on the first axial side L1. The second side wall portion 95 is formed so as to close the opening of the peripheral wall portion 93 on the second axial side L2.

In the present embodiment, the second partition portion 92 is formed so as to partition the first housing chamber A1 in the axial direction L. That is, in the present embodiment, the second partition portion 92 is formed so as to extend along the radial direction R between the first side wall portion 94 and the second side wall portion 95 in the axial direction L. Therefore, in the present embodiment, the rotary electric machine chamber A11 is formed between the second partition portion 92 and the second side wall portion 95 in the axial direction L in the first housing chamber A1. The gear mechanism chamber A12 is formed between the second partition portion 92 and the first side wall portion 94 in the axial direction L in the first housing chamber A1. In the example shown in FIG. 1, the second partition portion 92 is fixed to the peripheral wall portion 93 by bolt fastening.

In the present embodiment, the second housing chamber A2 is surrounded by a third side wall portion 96 and a lid portion 97. That is, in the present embodiment, the space surrounded by the third side wall portion 96 and the lid portion 97 inside the case 9 is formed as the second housing chamber A2.

The third side wall portion 96 has a tubular shape surrounding the sides of the control unit INV. The third side wall portion 96 extends in the radial direction R from the peripheral wall portion 93 so as to form an opening for taking the control unit INV into and out of the second housing chamber A2. In the present embodiment, the third side wall portion 96 has a square tubular shape whose axis extends along a specific radial direction R (vertical direction in FIG. 1). An opening is formed toward an outer side in the radial direction R (upper side in FIG. 1). The lid portion 97 is formed so as to close the opening of the third side wall portion 96.

The rotary electric machine MG functions as a driving force source for wheels W (see FIG. 2). The rotary electric machine MG has a function as a motor (electric motor) that receives supply of electric power to generate driving force, and a function as a generator (electric power generator) that receives supply of driving force to generate electric power. Specifically, the rotary electric machine MG is electrically connected to a power storage device such as a battery or a capacitor (not shown). The rotary electric machine MG generates a driving force by power running with electric power stored in the power storage device. The rotary electric machine MG generates electric power with a driving force transmitted from the wheels W to charge the power storage device.

The rotary electric machine MG includes a stator ST and a rotor RT. The stator ST includes a stator core STC fixed to a non-rotary member (in this case, the case 9). The rotor RT includes a rotor core RTC supported so as to be rotatable relative to the stator ST, and a rotor shaft RTS connected to the rotor core RTC so as to rotate integrally with the rotor core RTC.

In the present embodiment, the rotary electric machine MG is a revolving field-type rotary electric machine. Therefore, a stator coil is wound around the stator core STC. In the present embodiment, the stator coil is wound around the stator core STC so as to form a first coil end portion C1 protruding to the first axial side L1 with respect to the stator core STC and a second coil end portion C2 protruding to the second axial side L2 with respect to the stator core STC. The rotor core RTC includes permanent magnets (not shown).

In the present embodiment, the rotary electric machine MG is an inner rotor type rotary electric machine. Therefore, the rotor core RTC is disposed on an inner side in the radial direction R with respect to the stator core STC. The rotor core RTC supports the rotor shaft RTS from the outer side in the radial direction R.

The rotor shaft RTS is formed so as to extend along the axial direction L. In the present embodiment, the rotor shaft RTS has a tubular shape having an axis along the axial direction L. The rotor shaft RTS is supported so as to be rotatable relative to the case 9 by a first rotor bearing B11 and a second rotor bearing B 12 disposed on the second axial side L2 with respect to the first rotor bearing B 11. In the example shown in FIG. 1, the end of the rotor shaft RTS on the first axial side L1 is supported so as to be rotatable relative to the second partition portion 92 of the case 9 via the first rotor bearing B11. The end of the rotor shaft RTS on the second axial side L2 is supported so as to be rotatable relative to the second side wall portion 95 of the case 9 via the second rotor bearing B12. In this example, the first rotor bearing B11 and the second rotor bearing B12 are ball bearings.

The input member 1 is drivingly connected to the rotor RT of the rotary electric machine MG. In the present embodiment, the input member 1 includes an input gear 11 and an input shaft 12.

In the present application, "drivingly connected" refers to a state in which two rotation elements are connected so that a driving force can be transmitted, and includes a state in which the two rotation elements are connected so as to rotate integrally or a state in which the two rotation elements are connected so as to be able to transmit a driving force via one, two, or more transmitting members. Such transmitting members include various members that transmit rotation at the same speed or at a shifted speed, such as a shaft, a gear mechanism, a belt, and a chain. The transmitting members may include an engagement device that selectively transmits rotation and driving force, such as a friction engagement device and an intermeshing engagement device.

The input gear 11 is connected to the input shaft 12 so as to rotate integrally with the input shaft 12. In the example shown in FIG. 1, the input gear 11 is formed integrally with the input shaft 12. In the present embodiment, the input gear 11 is disposed between a first input bearing B21 and a second input bearing B22 in the axial direction L.

The input shaft 12 is formed so as to extend along the axial direction L. In the present embodiment, the input shaft 12 passes through the second partition portion 92 of the case 9 in the axial direction L, and is disposed across the rotary electric machine chamber A11 and the gear mechanism chamber A12. The input shaft 12 is disposed coaxially with the rotor shaft RTS of the rotary electric machine MG, and is connected to the rotor shaft RTS in the rotary electric machine chamber A11 so as to rotate integrally with the rotor shaft RTS. In the example shown in FIG. 1, a part of the input shaft 12 on the second axial side L2 with respect to the second partition portion 92 is disposed on the inner side in the radial direction R with respect to a part of the rotor shaft RTS protruding to the first axial side L1 with respect to the rotor core RTC. These parts are connected to each other by spline engagement so as to rotate integrally.

The transmission gear mechanism 2 drivingly connects the input member 1 and the output members 3. That is, the transmission gear mechanism 2 transmits rotation from the input member 1 to the output members 3. In the present embodiment, the transmission gear mechanism 2 includes a counter gear mechanism 4 and a differential gear mechanism 5.

The counter gear mechanism 4 is disposed on a second axis X2 different from the first axis X1. The second axis X2 is a rotation axis of the counter gear mechanism 4. In the present embodiment, the second axis X2 extends parallel to the first axis X1. That is, in the present embodiment, the second axis X2 extends along the axial direction L.

The counter gear mechanism 4 includes a counter input gear 41 that meshes with the input gear 11, a counter output gear 42 that rotates integrally with the counter input gear 41, and a counter shaft 43 that connects the counter input gear 41 and the counter output gear 42.

Each of the counter input gear 41 and the counter output gear 42 is connected to the counter shaft 43 so as to rotate integrally with the counter shaft 43. In the example shown in FIG. 1, the counter input gear 41 is connected to the counter shaft 43 by spline engagement. The counter output gear 42 is formed integrally with the counter shaft 43. The counter output gear 42 is formed to have a smaller diameter than the counter input gear 41.

The counter shaft 43 is formed so as to extend along the second axis X2. In the present embodiment, the counter shaft 43 is supported so as to be rotatable relative to the case 9 by a first counter bearing B31 and a second counter bearing B32 disposed on the second axial side L2 with respect to the first counter bearing B31. In the example shown in FIG. 1, the end of the counter shaft 43 on the first axial side L1 is supported so as to be rotatable relative to the first side wall portion 94 of the case 9 via the first counter bearing B31. The end of the counter shaft 43 on the second axial side L2 is supported so as to be rotatable relative to the second partition portion 92 of the case 9 via the second counter bearing B32. In this example, the first counter bearing B31 and the second counter bearing B32 are tapered roller bearings.

The differential gear mechanism 5 distributes rotation transmitted from the counter gear mechanism 4 to the pair of output members 3. In the present embodiment, the differential gear mechanism 5 includes a differential input gear 51 that meshes with the counter output gear 42 of the counter gear mechanism 4. Therefore, in the present embodiment, the differential gear mechanism 5 distributes rotation of the differential input gear 51 to the pair of output members 3.

The differential input gear 51 is disposed on a third axis X3 different from the first axis X1 and the second axis X2. The third axis X3 is a rotation axis of the differential input gear 51. In the present embodiment, the third axis X3 extends parallel to both the first axis X1 and the second axis X2. That is, in the present embodiment, the third axis X3 extends along the axial direction L.

In the present embodiment, the differential gear mechanism 5 further includes a differential case 52, a pair of pinion gears 53, a first side gear 54, and a second side gear 55. All the pair of pinion gears 53, the first side gear 54, and the second side gear 55 are bevel gears.

The differential case 52 is a hollow member that houses the pair of pinion gears 53, the first side gear 54, and the second side gear 55. The differential case 52 is connected to the differential input gear 51 so as to rotate integrally with the differential input gear 51. In the example shown in FIG. 1, the differential input gear 51 is connected to the differential case 52 by bolt fastening.

In the present embodiment, the differential case 52 is supported so as to be rotatable relative to the case 9 by a first differential bearing B41 and a second differential bearing B42 disposed on the second axial side L2 with respect to the first differential bearing B41. In the example shown in FIG. 1, the end of the differential case 52 on the first axial side L1 is supported so as to be rotatable relative to the first side wall portion 94 of the case 9 via the first differential bearing B41. The end of the differential case 52 on the second axial side L2 is supported so as to be rotatable relative to the second partition portion 92 of the case 9 via the second differential bearing B42. In this example, the first differential bearing B41 and the second differential bearing B42 are tapered roller bearings.

The pair of pinion gears 53 is disposed so as to face each other at an interval in the radial direction R with respect to the third axis X3. The pair of pinion gears 53 is attached to a pinion shaft 56 supported so as to rotate integrally with the differential case 52. The pair of pinion gears 53 is rotatable about the pinion shaft 56 and rotatable (revolvable) about the third axis X3.

The first side gear 54 and the second side gear 55 mesh with the pair of pinion gears 53. The first side gear 54 and the second side gear 55 are disposed so as to rotate about the third axis X3 serving as the rotation axis. The first side gear 54 and the second side gear 55 are disposed so as to face each other across the pinion shaft 56 while being spaced in the axial direction L. The first side gear 54 is disposed on the first axial side L1 with respect to the second side gear 55.

The output members 3 are drivingly connected to the wheels W (see FIG. 2). In the present embodiment, the pair of output members 3 is disposed away from each other in the axial direction L on the third axis X3. In the present embodiment, the pair of output members 3 is housed in the gear mechanism chamber A12. In the following description, the output member 3 on the first axial side L1 out of the pair of output members 3 will be referred to as "first output member 31", and the output member 3 on the second axial side L2 out of the pair of output members 3 will be referred to as "second output member 32".

In the present embodiment, the first output member 31 is connected to the first side gear 54 so as to rotate integrally with the first side gear 54. In the example shown in FIG. 1, the first output member 31 is formed integrally with the first side gear 54. In the present embodiment, the first output member 31 is connected to a drive shaft DS on the first axial side L1 so as to rotate integrally with this drive shaft DS. In the example shown in FIG. 1, the first output member 31 has a tubular shape having an axis along the axial direction L, and is disposed on the inner side in the radial direction R with respect to the first side gear 54. The drive shaft DS is inserted from the first axial side L1 onto the inner side in the radial direction R with respect to the first output member 31, and they are connected to each other by spline engagement.

In the present embodiment, the second output member 32 is connected to the second side gear 55 so as to rotate integrally with the second side gear 55. In the example shown in FIG. 1, the second output member 32 is formed integrally with the second side gear 55. In the present embodiment, the second output member 32 is connected to a drive shaft DS on the second axial side L2 via a transmission shaft 32a so as to rotate integrally with this drive shaft DS. In the example shown in FIG. 1, the second output member 32 has a tubular shape having an axis along the axial direction L, and is disposed on the inner side in the radial direction R with respect to the second side gear 55. The transmission shaft 32a is inserted from the second axial side L2 onto the inner side in the radial direction R with respect to the second output member 32, and they are connected to each other by spline engagement.

The transmission shaft 32a is a shaft member whose rotation axis is the third axis X3. In the present embodiment, the transmission shaft 32a passes through the second partition portion 92 of the case 9 in the axial direction L, and is disposed across the rotary electric machine chamber A11 and the gear mechanism chamber A12. The transmission shaft 32a is connected to the drive shaft DS on the second axial side L2 so as to rotate integrally with this drive shaft DS. In the example shown in FIG. 1, a part of the transmission shaft 32a that extends from the end face on the second axial side L2 to a position on the second axial side L2 with respect to the center in the axial direction L has a tubular shape that is open to the second axial side L2. The drive shaft DS is inserted from the second axial side L2 onto the inner side in the radial direction R with respect to the tubular part of the transmission shaft 32a, and they are connected to each other by spline engagement.

In the present embodiment, the transmission shaft 32a is supported so as to be rotatable relative to the case 9 by an output bearing B5. In the example shown in FIG. 1, the end of the transmission shaft 32a on the second axial side L2 is supported so as to be rotatable relative to the second side wall portion 95 of the case 9 via the output bearing B5.

The control unit INV controls the rotary electric machine MG. In the present embodiment, the control unit INV includes an inverter device. This inverter device is electrically connected to the power storage device and the rotary electric machine MG, and converts electric power between a direct current of the power storage device and a multiphase (in this case, three-phase) alternating current of the rotary electric machine MG. In this example, the control unit INV further includes a smoothing capacitor for smoothing a voltage on a direct current power supply side of the inverter device, and a control board for controlling an inverter circuit in the inverter device.

The first partition portion 91 of the case 9 includes a second communication portion 91a. The second communication portion 91a is formed so as to communicate the first housing chamber A1 and the second housing chamber A2. In the present embodiment, the second communication portion 91a is a through hole formed so as to communicate the rotary electric machine chamber A11 and the second housing chamber A2.

In the present embodiment, the control unit INV is electrically connected to the second coil end portion C2 of the rotary electric machine MG via a conductive member 10a having electrical conductivity. The conductive member 10a is disposed through the second communication portion 91a. That is, the conductive member 10a passes through the first partition portion 91 of the case 9, and is disposed across the second housing chamber A2 and the first housing chamber A1 (in this case, the rotary electric machine chamber A11). In the present embodiment, the conductive member 10a is supported on the first partition portion 91 via an insulating member 10b having electrical insulation. The insulating member 10b is inserted into the second communication portion 91a. A sealing member 10c is provided between the insulating member 10b and the second communication portion 91a. The sealing member 10c is a member (such as an O-ring) that seals a space between the insulating member 10b and the second communication portion 91a in an oil-tight manner.

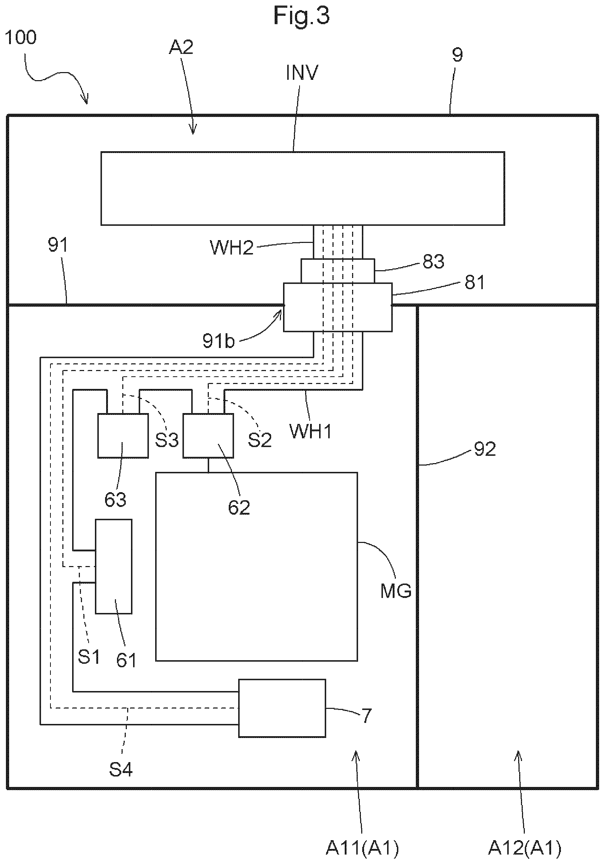

As shown in FIGS. 1 and 3, the vehicle drive device 100 includes a rotation sensor 61 and a temperature sensor 62. In the present embodiment, the vehicle drive device 100 further includes an oil temperature sensor 63 and a hydraulic pump 7. The rotation sensor 61, the temperature sensor 62, the oil temperature sensor 63, and the hydraulic pump 7 are housed in the first housing chamber A1. In the present embodiment, the rotation sensor 61, the temperature sensor 62, the oil temperature sensor 63, and the hydraulic pump 7 are housed in the rotary electric machine chamber A11.

The rotation sensor 61 is a sensor that detects rotation of the rotor RT of the rotary electric machine MG. As shown in FIG. 1, in the present embodiment, the rotation sensor 61 is disposed on the second axial side L2 with respect to the rotor RT. In the illustrated example, the rotation sensor 61 is positioned on the inner side in the radial direction R with respect to the second coil end portion C2 of the stator ST to overlap the second coil end portion C2 in a radial view along the radial direction R. Regarding the disposition of two elements, the phrase "overlap when viewed in a specific direction" means that, when a virtual straight line parallel to the line-of-sight direction is moved in directions orthogonal to the virtual straight line, an area where the virtual straight line intersects both the two elements is present at least in part.

In the present embodiment, the rotation sensor 61 includes a fixed body 61a and a rotary body 61b. Each of the fixed body 61a and the rotary body 61b has an annular shape centered on the first axis X1. The fixed body 61a is fixed to the case 9. In the present embodiment, the fixed body 61a is supported on the second side wall portion 95 of the case 9. The rotary body 61b is disposed on the inner side in the radial direction R with respect to the fixed body 61a so as to face the fixed body 61a in the radial direction R. The rotary body 61b is connected to the rotor RT so as to rotate integrally with the rotor RT. In the present embodiment, the rotary body 61b is connected to the rotor shaft RTS so as to rotate integrally with the rotor shaft RTS.

In this example, the rotation sensor 61 is a resolver. Therefore, the rotation sensor 61 detects a rotational position of the rotor shaft RTS by detecting a phase of an alternating current voltage associated with an angle of the rotary body 61b relative to the fixed body 61a when an alternating current flows through a coil provided on the fixed body 61a. The rotation sensor 61 is not limited to the resolver, and may be various sensors such as a Hall element sensor, an encoder, and a magnetic rotation sensor.

The temperature sensor 62 is a sensor that detects the temperature of the stator ST of the rotary electric machine MG. In the present embodiment, the temperature sensor 62 is disposed at the second coil end portion C2 of the rotary electric machine MG. In the present embodiment, the temperature sensor 62 is a thermistor. The thermistor includes an NTC thermistor that has a negative temperature coefficient and decreases in resistance as the temperature increases, and a PTC thermistor that has a positive temperature coefficient and increases in resistance as the temperature increases. The temperature sensor 62 is not limited to the thermistor, and may be, for example, a thermocouple.

The oil temperature sensor 63 is a sensor that detects the temperature of oil inside the case 9. In the present embodiment, the oil temperature sensor 63 is supported on the second side wall portion 95 of the case 9 so as to detect the temperature of the oil flowing through an oil passage P formed in the second side wall portion 95. In this example, the oil temperature sensor 63 is disposed on a downstream side of an oil cooler (not shown) that cools the oil discharged from the hydraulic pump 7. That is, in this example, the oil temperature sensor 63 detects the temperature of the oil cooled by passing through the oil cooler from the hydraulic pump 7.

The hydraulic pump 7 is a pump that supplies the oil to at least the rotary electric machine MG. Specifically, the hydraulic pump 7 supplies cooling oil to the stator ST and the rotor RT of the rotary electric machine MG. In the present embodiment, the hydraulic pump 7 further supplies, for lubrication, the oil to the bearings that rotatably support the rotor shaft RTS, the bearings that rotatably support the shafts of the input member 1 and the transmission gear mechanism 2, and the meshing portions of the gears. The hydraulic pump 7 is an electric hydraulic pump to be driven by an electric motor (not shown). The hydraulic pump 7 is fixed to the case 9.

As shown in FIG. 3, the rotation sensor 61 is connected to the control unit INV via a first signal line S1. The temperature sensor 62 is connected to the control unit INV via a second signal line S2. The oil temperature sensor 63 is connected to the control unit INV via a third signal line S3. The hydraulic pump 7 is connected to the control unit INV via a fourth signal line S4. The control unit INV controls the rotary electric machine MG and the hydraulic pump 7 (in this case, the motor for driving the hydraulic pump 7) based on a detection signal from the rotation sensor 61, a detection signal from the temperature sensor 62, and a detection signal from the oil temperature sensor 63.

The first partition portion 91 of the case 9 includes a first communication portion 91b. The first communication portion 91b is formed so as to communicate the first housing chamber A1 and the second housing chamber A2. In the present embodiment, the first communication portion 91b is a through hole formed so as to communicate the rotary electric machine chamber A11 and the second housing chamber A2. In this example, the first communication portion 91b is formed at one location on the first partition portion 91.

The first signal line S1 and the second signal line S2 are disposed through the first communication portion 91b. In the present embodiment, the third signal line S3 and the fourth signal line S4 are also disposed through the first communication portion 91b.

In the present embodiment, the first communication portion 91b is disposed on the first axial side L 1 with respect to the central portion of the rotary electric machine MG in the axial direction L. The second communication portion 91a is disposed on the second axial side L2 with respect to the central portion of the rotary electric machine MG in the axial direction L.

As described above, in the present embodiment, the stator ST includes the stator core STC and the second coil end portion C2 protruding to the second axial side L2 with respect to the stator core STC.

The control unit INV is electrically connected to the second coil end portion C2 via the conductive member 10a having electrical conductivity.

The first partition portion 91 further includes the second communication portion 91a that communicates the first housing chamber A1 and the second housing chamber A2.

The conductive member 10a is disposed through the second communication portion 91a.

The first communication portion 91b is disposed on the first axial side L1 with respect to the central portion of the rotary electric machine MG in the axial direction L.

The second communication portion 91a is disposed on the second axial side L2 with respect to the central portion of the rotary electric machine MG in the axial direction L.

According to this configuration, the first communication portion 91b through which the first signal line S1 and the second signal line S2 are inserted and the second communication portion 91a through which the conductive member 10a is inserted are disposed away from each other in the axial direction L. Thus, insulation between each of the first signal line S1 and the second signal line S2 and the conductive member 10a is secured easily.

In the present embodiment, the case 9 includes the second partition portion 92 that partitions the first housing chamber A1 into the rotary electric machine chamber A1 1 that houses the rotary electric machine MG, the rotation sensor 61, and the temperature sensor 62 and the gear mechanism chamber A12 that houses the transmission gear mechanism 2.

The first communication portion 91b is formed so as to communicate the rotary electric machine chamber A11 and the second housing chamber A2.

According to this configuration, both the rotation sensor 61 and the temperature sensor 62 electrically connected to the control unit INV are disposed in the rotary electric machine chamber A11. The first signal line S1 connecting the rotation sensor 61 and the control unit INV and the second signal line S2 connecting the temperature sensor 62 and the control unit INV are disposed through the first communication portion 91b formed so as to communicate the rotary electric machine chamber A11 and the second housing chamber A2. Therefore, the rotation sensor 61 and the temperature sensor 62 can electrically be connected to the control unit INV without causing the first signal line S1 and the second signal line S2 to pass through the gear mechanism chamber A12. Thus, the structure for connection of the rotation sensor 61 and the temperature sensor 62 to the control unit INV can be simplified compared to a configuration in which the first communication portion 91b is formed so as to communicate the gear mechanism chamber A12 and the second housing chamber A2.

According to this configuration, the first communication portion 91b is formed so as to communicate the rotary electric machine chamber A11 and the second housing chamber A2. The amount of oil that scatters along with the rotation of the rotor RT of the rotary electric machine MG housed in the rotary electric machine chamber A11 is relatively small. The amount of oil that scatters along with the rotation of each element of the transmission gear mechanism 2 housed in the gear mechanism chamber A12 is relatively large. Therefore, according to this configuration, it is possible to reduce the necessity to provide a member for suppressing entry of oil into the first communication portion 91b compared to a configuration in which the first communication portion 91b is formed so as to communicate the gear mechanism chamber A12 and the second housing chamber A2.

In the present embodiment, in the configuration in which the case 9 includes the second partition portion 92,
the vehicle drive device 100 further includes:
the oil temperature sensor 63 that is connected to the control unit INV via the third signal line S3 and detects the temperature of the oil in the case 9; and
the hydraulic pump 7 that is connected to the control unit INV via the fourth signal line S4 and supplies the oil to at least the rotary electric machine MG.

The oil temperature sensor 63 and the hydraulic pump 7 are housed in the rotary electric machine chamber A11.

The third signal line S3 and the fourth signal line S4 are disposed through the first communication portion 91b.

According to this configuration, the third signal line S3 and the fourth signal line S4 in addition to the first signal line S1 and the second signal line S2 are disposed across the rotary electric machine chamber A11 and the second housing chamber A2 through the first communication portion 91b of the first partition portion 91 disposed inside the case 9. The oil temperature sensor 63 and the hydraulic pump 7 in addition to the rotation sensor 61 and the temperature sensor 62 are housed in the rotary electric machine chamber A11. Thus, it is possible to simplify the structure for connection of the rotation sensor 61, the temperature sensor 62, the oil temperature sensor 63, and the hydraulic pump 7 to the control unit INV.

In the present embodiment, the transmission gear mechanism 2 is disposed on the first axial side L1 with respect to the rotary electric machine MG.

The rotation sensor 61 is disposed on the second axial side L2 with respect to the rotor RT.

The stator ST includes the stator core STC and the second coil end portion C2 protruding to the second axial side L2 with respect to the stator core STC.

The temperature sensor 62 is disposed at the second coil end portion C2.

According to this configuration, both the rotation sensor 61 and the temperature sensor 62 electrically connected to the control unit INV can be disposed closer to the second axial side L2. Therefore, it is easy to collectively dispose the first signal line S1 connecting the rotation sensor 61 and the control unit INV and the second signal line S2 connecting the temperature sensor 62 and the control unit INV. Thus, it is possible to further simplify the structure for connection of the rotation sensor 61 and the temperature sensor 62 to the control unit INV.

As shown in FIG. 1, in the present embodiment, the vehicle drive device 100 further includes a closing member 81 and a sealing member 82. The closing member 81 is a member housed in the first communication portion 91b so as to close the first communication portion 91b. The sealing member 82 is a member (such as an O-ring) that seals a space between the closing member 81 and the first communication portion 91b in an oil-tight manner. In the present embodiment, the sealing member 82 is disposed between the inner surface of the first partition portion 91 forming the first communication portion 91b as the through hole and the outer surface of the closing member 81.

As shown in FIG. 3, in the present embodiment, the first signal line S1 and the second signal line S2 are disposed through the inside of the closing member 81. In this example, the third signal line S3 and the fourth signal line S4 are also disposed through the inside of the closing member 81.

As described above, in the present embodiment, the vehicle drive device 100 further includes the closing member 81 housed in the first communication portion 91b so as to close the first communication portion 91b, and the sealing member 82 that seals the space between the closing member 81 and the first communication portion 91b in an oil-tight manner.

The first signal line S1 and the second signal line S2 are disposed through the inside of the closing member 81.

According to this configuration, the rotation sensor 61 and the temperature sensor 62 can appropriately be connected to the control unit INV by the first signal line S1 and the second signal line S2 disposed through the inside of the closing member 81, and the sealing member 82 that seals the space between the closing member 81 and the first communication portion 91b in an oil-tight manner can suppress entry of oil from the first housing chamber A1 that houses the rotary electric machine MG, the transmission gear mechanism 2, and the like to the second housing chamber A2 that houses the control unit INV.

In this example, the closing member 81 is a connector attached to the end of a first wire harness WH1. The first wire harness WH1 is a member obtained by integrally connecting a wire connected to the rotation sensor 61 to serve as a part of the first signal line S1, a wire connected to the temperature sensor 62 to serve as a part of the second signal line S2, a wire connected to the oil temperature sensor 63 to serve as a part of the third signal line S3, and a wire connected to the hydraulic pump 7 to serve as a part of the fourth signal line S4.

In this example, a connection member 83 is detachably provided to the closing member 81. The connection member 83 is a connector attached to the end of a second wire harness WH2. The second wire harness WH2 is a member obtained by integrally connecting a wire connected to the control unit INV to serve as a part of the first signal line S1, a wire connected to the control unit INV to serve as a part of the second signal line S2, a wire connected to the control unit INV to serve as a part of the third signal line S3, and a wire connected to the control unit INV to serve as a part of the fourth signal line S4. In this example, the first signal line S1, the second signal line S2, the third signal line S3, and the fourth signal line S4 are continuously formed by connecting the connection member 83 to the closing member 81.

### [Other Embodiments]

(1) In the above embodiment, description has been given of the exemplary configuration in which the first signal line S1 to the fourth signal line S4 are disposed through the first communication portion 91b that is one through hole formed in the first partition portion 91 of the case 9. However, the present invention is not limited to such a configuration. For example, two through holes may be formed in the first partition portion 91 as the first communication portions 91b, the first signal line S1 and the second signal line S2 may be disposed through one through hole, and the third signal line S3 and the fourth signal line S4 may be disposed through the other through hole. Alternatively, four through holes may be formed in the first partition portion 91 as the first communication portions 91b, and the first signal line S1 to the fourth signal line S4 may be disposed through the four through holes, respectively.
(2) In the above embodiment, description has been given of the exemplary configuration in which the closing member 81 is the connector connectable to the connection member 83 and the state in which the first signal line S1 to the fourth signal line S4 are formed and the state in which the first signal line S1 to the fourth signal line S4 are not formed are switched by attaching or detaching the connection member 83 to or from the closing member 81. However, the present invention is not limited to such a configuration. The closing member 81 need not be the connector but may be a member that closes the first communication portion 91b and holds the wires serving as the first signal line S1 to the fourth signal line S4. In this configuration, the first signal line S1 to the fourth signal line S4 are held by the closing member 81 while continuously passing through the closing member 81.
(3) In the above embodiment, description has been given of the exemplary configuration in which the first communication portion 91b is formed so as to communicate the rotary electric machine chamber A11 and the second housing chamber A2. However, the present invention is not limited to such a configuration. The first communication portion 91b may be formed so as to communicate the gear mechanism chamber A12 and the second housing chamber A2.
(4) In the above embodiment, description has been given of the exemplary configuration in which the transmission gear mechanism 2 is disposed on the first axial side L1 with respect to the rotary electric machine MG, the rotation sensor 61 is disposed on the second axial side L2 with respect to the rotor RT, and the temperature sensor 62 is disposed at the second coil end portion C2. However, the present invention is not limited to such a configuration. For example, the rotation sensor 61 may be disposed on the first axial side L1 with respect to the rotor RT. The temperature sensor 62 may be disposed at the first coil end portion C1.
(5) In the above embodiment, description has been given of the exemplary configuration in which the case 9 includes the second partition portion 92 that partitions the first housing chamber A1 into the rotary electric machine chamber A11 and the gear mechanism chamber A12. However, the present invention is not limited to such a configuration. For example, the case 9 need not include the second partition portion 92, and the rotary electric machine MG and the transmission gear mechanism 2 may be housed in one continuous first housing chamber A1. Alternatively, the case 9 may include a further partition portion in addition to the second partition portion 92 to divide the first housing chamber A1 into three or more spaces.
(6) In the above embodiment, description has been given of the exemplary configuration in which the vehicle drive device 100 includes the oil temperature sensor 63, the third signal line S3 connecting the oil temperature sensor 63 and the control unit INV, the hydraulic pump 7, and the fourth signal line S4 connecting the hydraulic pump 7 and the control unit INV. However, the present invention is not limited to such a configuration. For example, the vehicle drive device 100 need not include at least one of the set of the oil temperature sensor 63 and the third signal line S3 and the set of the hydraulic pump 7 and the fourth signal line S4. Even with those components, at least one of the third signal line S3 and the fourth signal line S4 need not pass through the first communication portion 91b.
(7) In the above embodiment, description has been given of the exemplary configuration in which the vehicle drive device 100 includes the closing member 81 housed in the first communication portion 91b so as to close the first communication portion 91b, and the sealing member 82 that seals the space between the closing member 81 and the first communication portion 91b in an oil-tight manner. However, the present invention is not limited to such a configuration. For example, the closing member 81 need not be disposed in the first communication portion 91b, and only the sealing member 82 may seal the space between each of the first signal line S1, the second signal line S2, and the like and the first communication portion 91b in an oil-tight manner. Alternatively, neither the closing member 81 nor the sealing member 82 may be disposed in the first communication portion 91b.
(8) In the above embodiment, description has been given of the exemplary configuration in which the first communication portion 91b is disposed on the first axial side L1 with respect to the central portion of the rotary electric machine MG in the axial direction L and the second communication portion 91a is disposed on the second axial side L2 with respect to the central portion of the rotary electric machine MG in the axial direction L. However, the present invention is not limited to such a configuration. For example, both the first communication portion 91b and the second communication portion 91a may be disposed on the second axial side L2 with respect to the central portion of the rotary electric machine MG in the axial direction L.
(9) The configurations disclosed in the above embodiments can be applied in combination with the configurations disclosed in other embodiments as long as there is no contradiction. Regarding the other configurations, the embodiments disclosed herein are merely illustrative in all respects. Therefore, various modifications can be made as appropriate without departing from the spirit of the present disclosure.

### [Outline of Embodiment Described Above]

Hereinafter, the outline of the vehicle drive device (100) described above will be described.

A vehicle drive device (100) includes:
a rotary electric machine (MG) including a stator (ST) and a rotor (RT) and functioning as a driving force source for a wheel (W);
an input member (1) drivingly connected to the rotor (RT);
an output member (3) drivingly connected to the wheel (W);
a transmission gear mechanism (2) that drivingly connects the input member (1) and the output member (3);
a control unit (INV) configured to control the rotary electric machine (MG);
a rotation sensor (61) connected to the control unit (INV) via a first signal line (S1) and configured to detect rotation of the rotor (RT);
a temperature sensor (62) connected to the control unit (INV) via a second signal line (S2) and configured to detect a temperature of the stator (ST); and
a case (9) including a first housing chamber (A1) that houses the rotary electric machine (MG), the input member (1), the transmission gear mechanism (2), the rotation sensor (61), and the temperature sensor (62), and a second housing chamber (A2) that houses the control unit (INV), in which
the case (9) includes a first partition portion (91) that partitions the first housing chamber (A1) and the second housing chamber (A2) from each other,
the first partition portion (91) includes a first communication portion (91b) that communicates the first housing chamber (A1) and the second housing chamber (A2), and
the first signal line (S1) and the second signal line (S2) are disposed through the first communication portion (91b).

According to this configuration, the first partition portion (91) that partitions the first housing chamber (A1) that houses the rotation sensor (61) and the temperature sensor (62) from the second housing chamber (A2) that houses the control unit (INV) includes the first communication portion (91b) that communicates the first housing chamber (A1) and the second housing chamber (A2). The first signal line (S1) connecting the rotation sensor (61) and the control unit (INV) and the second signal line (S2) connecting the temperature sensor (62) and the control unit (INV) are disposed through the first communication portion (91b). In this way, the first signal line (S1) and the second signal line (S2) are disposed across the first housing chamber (A1) and the second housing chamber (A2) through the first communication portion (91b) of the first partition portion (91) disposed inside the case (9). Therefore, the first signal line (S1) and the second signal line (S2) can appropriately be disposed without providing the case (9) with, for example, a connector exposed to the outside and an external cable connected to the connector. Thus, it is possible to reduce the number of components for electrically connecting the rotation sensor (61) and the temperature sensor (62) to the control unit (INV).

According to the above configuration, the first signal line (S1) and the second signal line (S2) can be disposed inside the case (9) without passing outside the case (9). Therefore, it is possible to reduce the number of locations where a sealing structure for preventing entry of water or the like into the case (9) is provided.

As described above, according to the above configuration, it is possible to simplify the structure for connection of the rotation sensor (61) and the temperature sensor (62) to the control unit (INV).

It is preferable that, assuming that a direction along a rotation axis of the rotary electric machine (MG) is an axial direction (L), one side in the axial direction (L) is a first axial side (L1), and the other side in the axial direction (L) is a second axial side (L2),
the stator (ST) include a stator core (STC) and a coil end portion (C2) protruding to the second axial side (L2) with respect to the stator core (STC),
the control unit (INV) be electrically connected to the coil end portion (C2) via a conductive member (10a) having electrical conductivity,
the first partition portion (91) further include a second communication portion (91a) that communicates the first housing chamber (A1) and the second housing chamber (A2),
the conductive member (10a) be disposed through the second communication portion (91a),
the first communication portion (91b) be disposed on the first axial side (L1) with respect to a central portion of the rotary electric machine (MG) in the axial direction (L), and
the second communication portion (91a) be disposed on the second axial side (L2) with respect to the central portion of the rotary electric machine (MG) in the axial direction (L).

According to this configuration, the first communication portion (91b) through which the first signal line (S1) and the second signal line (S2) are inserted and the second communication portion (91a) through which the conductive member (10a) is inserted are disposed away from each other in the axial direction (L). Thus, insulation between each of the first signal line (S 1) and the second signal line (S2) and the conductive member (10a) is secured easily.

It is preferable that the case (9) include a second partition portion (92) that partitions the first housing chamber (A1) into a rotary electric machine chamber (A11) that houses the rotary electric machine (MG), the rotation sensor (61), and the temperature sensor (62) and a gear mechanism chamber (A12) that houses the transmission gear mechanism (2), and
the first communication portion (91b) be formed so as to communicate the rotary electric machine chamber (A11) and the second housing chamber (A2).

According to this configuration, both the rotation sensor (61) and the temperature sensor (62) electrically connected to the control unit (INV) are disposed in the rotary electric machine chamber (A11). The first signal line (S1) connecting the rotation sensor (61) and the control unit (INV) and the second signal line (S2) connecting the temperature sensor (62) and the control unit (INV) are disposed through the first communication portion (91b) formed so as to communicate the rotary electric machine chamber (A11) and the second housing chamber (A2). Therefore, the rotation sensor (61) and the temperature sensor (62) can electrically be connected to the control unit (INV) without causing the first signal line (S1) and the second signal line (S2) to pass through the gear mechanism chamber (A12). Thus, the structure for connection of the rotation sensor (61) and the temperature sensor (62) to the control unit (INV) can be simplified compared to a configuration in which the first communication portion (91b) is formed so as to communicate the gear mechanism chamber (A12) and the second housing chamber (A2).

According to this configuration, the first communication portion (91b) is formed so as to communicate the rotary electric machine chamber (A11) and the second housing chamber (A2). The amount of oil that scatters along with the rotation of the rotor (RT) of the rotary electric machine (MG) housed in the rotary electric machine chamber (A11) is relatively small. The amount of oil that scatters along with the rotation of each element of the transmission gear mechanism (2) housed in the gear mechanism chamber (A12) is relatively large. Therefore, according to this configuration, it is possible to reduce the necessity to provide a member for suppressing entry of oil into the first communication portion (91b) compared to a configuration in which the first communication portion (91b) is formed so as to communicate the gear mechanism chamber (A12) and the second housing chamber (A2).

In the configuration in which the case (9) includes the second partition portion (92),
it is preferable that the vehicle drive device (100) further include:
an oil temperature sensor (63) connected to the control unit (INV) via a third signal line (S3) and configured to detect a temperature of oil in the case (9); and
a hydraulic pump (7) connected to the control unit (INV) via a fourth signal line (S4) and configured to supply the oil to at least the rotary electric machine (MG),
the oil temperature sensor (63) and the hydraulic pump (7) be housed in the rotary electric machine chamber (A11), and
the third signal line (S3) and the fourth signal line (S4) be disposed through the first communication portion (91b).

According to this configuration, the third signal line (S3) and the fourth signal line (S4) in addition to the first signal line (S1) and the second signal line (S2) are disposed across the rotary electric machine chamber (A11) and the second housing chamber (A2) through the first communication portion (91b) of the first partition portion (91) disposed inside the case (9). The oil temperature sensor (63) and the hydraulic pump (7) in addition to the rotation sensor (61) and the temperature sensor (62) are housed in the rotary electric machine chamber (A11). Thus, it is possible to simplify the structure for connection of the rotation sensor (61), the temperature sensor (62), the oil temperature sensor (63), and the hydraulic pump (7) to the control unit (INV).

It is preferable that, assuming that a direction along a rotation axis of the rotary electric machine (MG) is an axial direction (L), one side in the axial direction (L) is a first axial side (L1), and the other side in the axial direction (L) is a second axial side (L2),
the transmission gear mechanism (2) be disposed on the first axial side (L1) with respect to the rotary electric machine (MG),
the rotation sensor (61) be disposed on the second axial side (L2) with respect to the rotor (RT),
the stator (ST) include a stator core (STC) and a coil end portion (C2) protruding to the second axial side (L2) with respect to the stator core (STC), and
the temperature sensor (62) be disposed at the coil end portion (C2).

According to this configuration, both the rotation sensor (61) and the temperature sensor (62) electrically connected to the control unit (INV) can be disposed closer to the second axial side (L2). Therefore, it is easy to collectively dispose the first signal line (S1) connecting the rotation sensor (61) and the control unit (INV) and the second signal line (S2) connecting the temperature sensor (62) and the control unit (INV). Thus, it is possible to further simplify the structure for connection of the rotation sensor (61) and the temperature sensor (62) to the control unit (INV).

### INDUSTRIAL APPLICABILITY

The technology according to the present disclosure is applicable to a vehicle drive device including a rotary electric machine that functions as a driving force source for wheels, an input member drivingly connected to a rotor of the rotary electric machine, an output member drivingly connected to the wheels, a transmission gear mechanism that drivingly connects the input member and the output member, a control unit that controls the rotary electric machine, a rotation sensor that detects rotation of the rotor of the rotary electric machine, a temperature sensor that detects the temperature of a stator of the rotary electric machine, and a case that houses the rotary electric machine, the control unit, and the like.

### Description of the Reference Numerals

100: vehicle drive device, 1: input member, 2: transmission gear mechanism, 3: output member, 4: output member, 61: rotation sensor, 62: temperature sensor, 9: case, 91: first partition portion, 91b: first communication portion, A1: first housing chamber, A2: second housing chamber, INV: control unit, MG: rotary electric machine, ST: stator, RT: rotor, S1: first signal line, S2: second signal line, W: wheel

## Claims

1. A vehicle drive device comprising:
a rotary electric machine including a stator and a rotor and functioning as a driving force source for a wheel;
an input member drivingly connected to the rotor;
an output member drivingly connected to the wheel;
a transmission gear mechanism that drivingly connects the input member and the output member;
a control unit configured to control the rotary electric machine;
a rotation sensor connected to the control unit via a first signal line and configured to detect rotation of the rotor;
a temperature sensor connected to the control unit via a second signal line and configured to detect a temperature of the stator; and
a case including a first housing chamber that houses the rotary electric machine, the input member, the transmission gear mechanism, the rotation sensor, and the temperature sensor, and a second housing chamber that houses the control unit, wherein
the case includes a first partition portion that partitions the first housing chamber and the second housing chamber from each other,
the first partition portion includes a first communication portion that communicates the first housing chamber and the second housing chamber, and
the first signal line and the second signal line are disposed through the first communication portion.

2. The vehicle drive device according to claim 1, wherein
assuming that a direction along a rotation axis of the rotary electric machine is an axial direction, one side in the axial direction is a first axial side, and the other side in the axial direction is a second axial side,
the stator includes a stator core and a coil end portion protruding to the second axial side with respect to the stator core,
the control unit is electrically connected to the coil end portion via a conductive member having electrical conductivity,
the first partition portion further includes a second communication portion that communicates the first housing chamber and the second housing chamber,
the conductive member is disposed through the second communication portion,
the first communication portion is disposed on the first axial side with respect to a central portion of the rotary electric machine in the axial direction, and
the second communication portion is disposed on the second axial side with respect to the central portion of the rotary electric machine in the axial direction.

3. The vehicle drive device according to claim 1 or 2, wherein
the case includes a second partition portion that partitions the first housing chamber into a rotary electric machine chamber that houses the rotary electric machine, the rotation sensor, and the temperature sensor and a gear mechanism chamber that houses the transmission gear mechanism, and
the first communication portion is formed so as to communicate the rotary electric machine chamber and the second housing chamber.

4. The vehicle drive device according to claim 3, further comprising:
an oil temperature sensor connected to the control unit via a third signal line and configured to detect a temperature of oil in the case; and
a hydraulic pump connected to the control unit via a fourth signal line and configured to supply the oil to at least the rotary electric machine, wherein
the oil temperature sensor and the hydraulic pump are housed in the rotary electric machine chamber, and
the third signal line and the fourth signal line are disposed through the first communication portion.

5. The vehicle drive device according to any one of claims 1 to 4, wherein
assuming that a direction along a rotation axis of the rotary electric machine is an axial direction, one side in the axial direction is a first axial side, and the other side in the axial direction is a second axial side,
the transmission gear mechanism is disposed on the first axial side with respect to the rotary electric machine,
the rotation sensor is disposed on the second axial side with respect to the rotor,
the stator includes a stator core and a coil end portion protruding to the second axial side with respect to the stator core, and
the temperature sensor is disposed at the coil end portion.
